# EUROPÄISCHE PATENTANMELDUNG

(11) **EP 1 288 052 A1**
(43) Veröffentlichungstag der Anmeldung: **05.03.2003**
(21) Anmeldenummer: 02014604.9
(22) Anmeldetag: 02.07.2002
(51) Int. Cl.: B60K 13/04

(54) **Abgasanlage mit einer Endrohrvorrichtung**

(30) Priorität: 17.08.2001 DE 10140435
(71) Anmelder: Dr.Ing. h.c.F. Porsche Aktiengesellschaft, 70435 Stuttgart (DE)
(72) Erfinder: Lai, Pinky, 75203 Königsbach-Stein (DE)

(57) **Zusammenfassung**

Diese Abgasanlage (2) ist mit einer Endrohrvorrichtung (6) versehen, die benachbart zu einem Wandteil (4) eines Aufbaus (5) eines Kraftfahrzeugs (1) verläuft.

Damit die Abgasanlage (2) bzw. die Endrohrvorrichtung (6) einerseits über ausreichend Raum für Relativbewegungen verfügt und andererseits in die sichtbare Formstruktur des Aufbaus (5) organisch integriert ist, liegt - in Fahrtrichtung gesehen - die Endrohrvorrichtung (6) mit einem freien Ende vor dem Wandteil (4), und - von der Rückseite des Kraftfahrzeugs (1) auf die Endvorrichtung (6) gesehen - korrespondiert im Wesentlichen eine erste Kontur (19) eines Endbereichs des Wandteils (4) zumindest abschnittsweise mit einer äußeren zweiten Kontur (20) der Endvorrichtung (6).

## Beschreibung

Die Erfindung betrifft eine Abgasanlage mit einer Endvorrichtung nach dem Oberbegriff des Patentanspruchs 1.

Eine bekannte Abgasanlage für ein Kraftfahrzeug, EP 0 848144 A1, besitzt ein Abgasrohr, dessen freies Ende mit einer Endrohrvorrichtung versehen ist. Die Endrohrvorrichtung ist doppelwandig ausgeführt, wofür ein Innenschale und eine Außenschale vorgesehen sind. Die Innenschale und die Außenschale sind so zueinander angeordnet, dass sich ein Luftspalt bzw. ein Ringkanal ergibt. Am hinteren Ende der Endrohrvorrichtung ist der Ringkanal geschlossen; am vorderen Ende ist er offen. Dadurch wird eine gezielte Wärmeableitung an der Endrohrvorrichtung erreicht.

Aus der DE 1 948 939 geht ein Endstück für die Auspuffleitung eines von einer Brennkraftmaschine angetriebenen Kraftfahrzeugs hervor, das mit Abstand zu einer quer verlaufenden Karosseriewand verläuft. Dieser Abstand ist erforderlich, damit das Endstück beim Betrieb der Brennkraftmaschine gegenüber der Karosseriewand Relativbewegungen ausführen kann. Allerdings erschwert diese Gestaltung die formale Integration des Endstücks in die benachbarte Karosseriewand.

Eine derartige Integration behandelt die US 2,992,035, die eine Endrohrvorrichtung einer Abgasanlage eines Kraftfahrzeugs wiedergibt, welche Endrohrvorrichtung in Fahrtrichtung gesehen vor einem Stossfänger von einer trichterartigen Rohrverlängerung umgeben ist, dergestalt dass die Endrohrvorrichtung relativbeweglich in der Rohrverlängerung gelagert ist. Die Rohrverlängerung durchdringt mit ihrem hinteren Ende eine Öffnung in einer Wand des Stossfängers und ist dadurch baulich und optisch mit dem Stossfänger vereinigt. Dieser Ausführung haftet der Nachteil an dass die Lagerung der Endrohrvorrichtung und die Rohrverlängerung, einschließlich ihrer Eingliederung in den Stossfänger einen relativ hohen Bauaufwand verursachen.

Es ist daher Aufgabe der Erfindung eine Endrohrvorrichtung für eine Abgasanlage eines Kraftfahrzeugs zu schaffen, die zum einen für die erforderlichen Relativbewegungen entsprechend gelagert ist und zum anderen in die Formstruktur eines Aufbaus des Kraftfahrzeugs eingefügt ist. Dabei sollte aber sichergestellt sein, dass die Wärme im Bereich der Endrohrvorrichtung unschädlich für angrenzende Wandteile des Aufbaus ist.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Endrohrvorrichtung der Abgasanlage eine auch die Anmutung des Kraftfahrzeugs optimierende formale Einheit mit dem benachbarten Wandteil des Aufbaus bildet, ohne dabei bezüglich der beim Betrieb der Brennkraftmaschine des Kraftfahrzeugs auftretenden Relativbewegungen beeinträchtigt zu sein. Dies wird dadurch erreicht, dass - in Fahrtrichtung gesehen - die Endrohrvorrichtung mit einem freien bzw. hinteren Ende vor dem Wandteil des Aufbaus liegt und ein Endabschnitt des Wandteils, der der Endrohrvorrichtung zugekehrt ist, mit einer Außenkontur der besagten Endvorrichtung im Wesentlichen korrespondiert. Das Wandteil kann durch eine Blende gebildet werden, die in eine aus Kunststoff bestehende Heckverkleidung eingesetzt sein kann. Um die Heckverkleidung vor hochtemperierten Abgasströmen zu schützen ist die Blende als Hitzeschild ausgeführt. Schließlich ist die Blende, die lackiert oder verchromt sein kann, ein einfach herstellbares Bauteil, und sie lässt sich leicht mit der Heckverkleidung verbinden.

In der Zeichnung wird ein Ausführungsbeispiel der Erfindung gezeigt, das nachstehend näher beschrieben ist.

Es zeigen
- Fig. 1: eine Ansicht von hinten auf eine Abgasanlage eines von einer Brennkraftmaschine angetriebenen Kraftfahrzeugs,

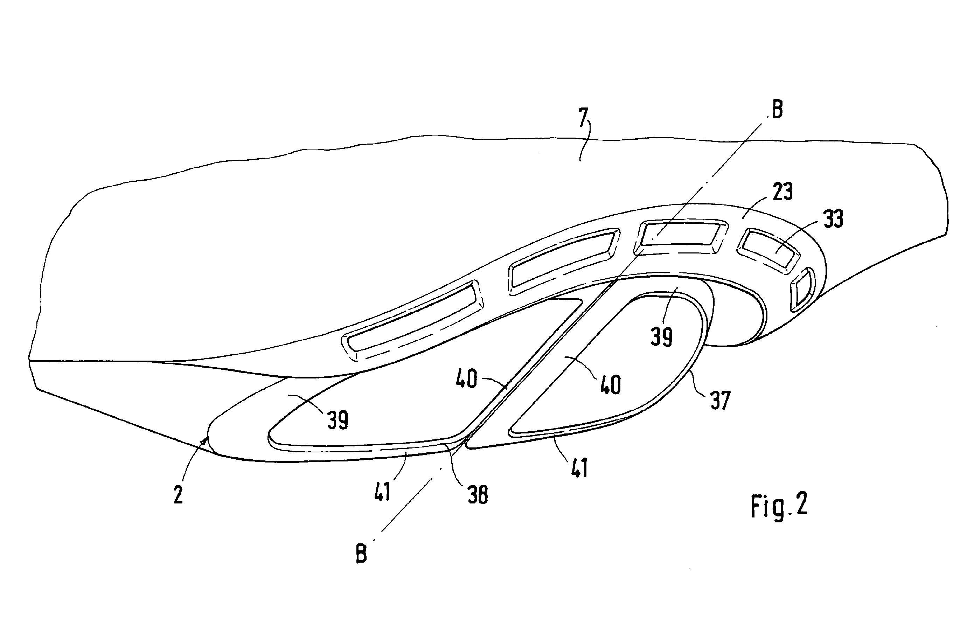

- Fig. 2: eine Schrägansicht von hinten links auf die Abgasanlage,
- Fig. 3: einen Schnitt nach der Linie III-III der Fig.1 in größerem Maßstab.

Ein lediglich bereichsweise gezeigtes Kraftfahrzeug 1 wird von einer mehrzylindrigen Brennkraftmaschine bspw. mit gegenüberliegenden Zylinderreihen angetrieben- letzteres ist nicht dargestellt. Der die Brennkraftmaschine verlassende Gasstrom gelangt nach katalytischer Reinigung über eine Abgasanlage 2 in die Atmosphäre. Die relativbeweglich gelagerte Abgasanlage 2 - Pfeilangabe RI-RII und RIII-IV -, die einer Fahrbahn 3 zugekehrt ist, ist benachbart einem Wandteil 4 eines Aufbaus 5 mit einer Endrohrvorrichtung 6 versehen, wobei das Wandteil 4 Bestandteil einer Heckverkleidung 7 ist, die z.B. aus einem geeigneten Kunststoff hergestellt sein kann. Die einen Endabschnitt 8 eines Abgasrohrs 9 der Abgasanlage 2 umgebende Endrohrvorrichtung 6 ist doppelwandig ausgeführt und wird durch ein Innenteil 10 und ein Außenteil 11 gebildet; hierzu wird auf die eingangs genannte EP 0 848144 A1 verwiesen. An einem ersten freien Ende 12 der Endrohrvorrichtung 6 sind das Innenteil 10 und das Außenteil 11 geschlossen, dergestalt, dass ein Ringraum 13 entsteht. Der Ringraum 13 ist an einem zweiten Ende 14, der mit Abstand zum ersten Ende 12 verläuft, offen, wodurch eine gezielte Abfuhr der durch den Gasstrom erzeugten Wärme erreicht wird.

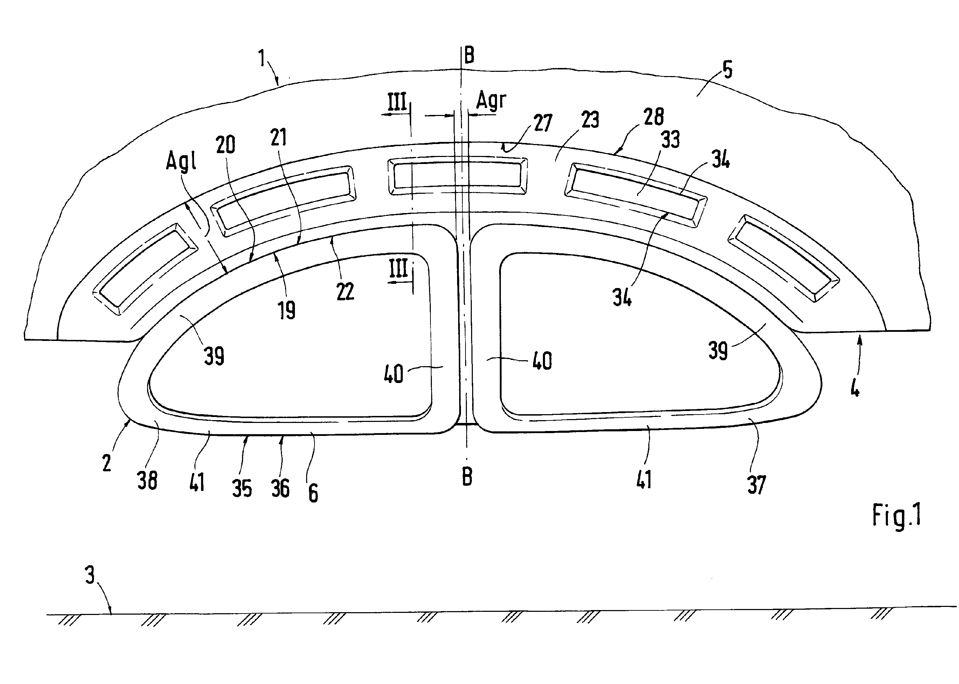

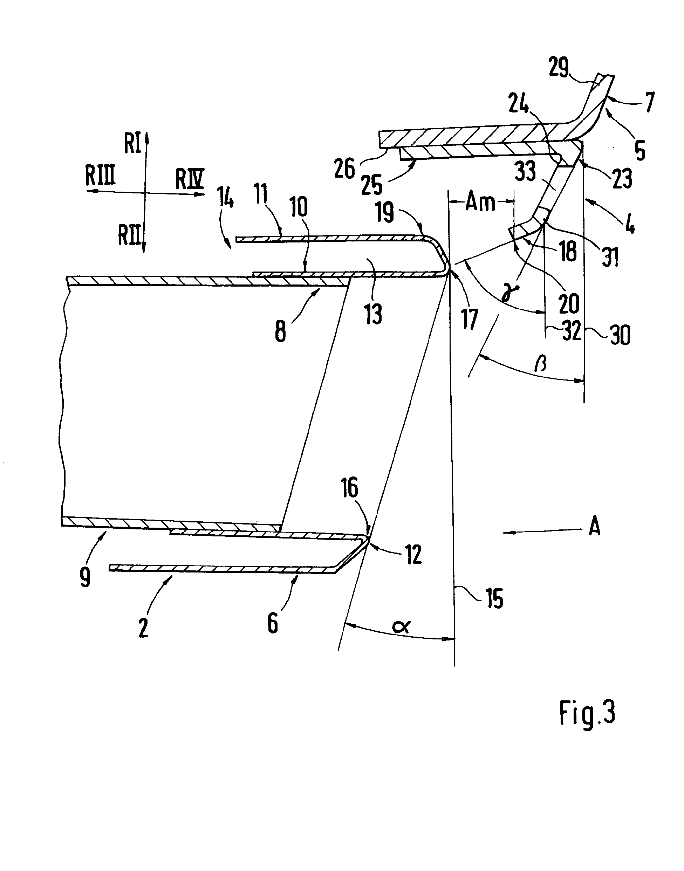

Das erste Ende 12 der Endrohrvorrichtung 6 verläuft im Winkel α zu einer ersten Senkrechten 15, wobei dieses Ende 12 in Fahrtrichtung A gesehen mit einem unteren Endabschnitt 16 vor einem oberen Endabschnitt 17 liegt. Darüber hinaus ist der obere Endabschnitt 17 des Endes 12 in Fahrtrichtung A gesehen vor einem unteren Endbereich 18 des Wandteils 4 angeordnet, was durch das Abstandsmaß Am verdeutlicht wird - Fig. 3 -. Jedoch korrespondiert eine erste Kontur 19 des Endbereichs 17 mit einer zweiten Kontur 20 des unteren Endbereichs 18 des Wandteils 4 - Fig.1. -. Die zweite Kontur 20 ist als konvexer Bogen 21 ausgebildet; die erste Kontur 19 als konkaver Bogen 22. Die Bögen 21,22 verlaufen symmetrisch zu einer senkrechten Mittellängsebene B-B der Endvorrichtung 6 - Fig.1-.

Das Wandteil 4 ist als eine in die Heckverkleidung 7 eingegliederte Blende 23 ausgeführt, die aus Metall, Keramik oder dergl. besteht und als Hitzeschild für die Heckverkleidung ausgebildet ist. Die Blende 23 weist ein winkelförmiges Profil mit Schenkeln 24,25 auf. Der Schenkel 24 ist relativ aufrecht angeordnet; der Schenkel 25 horizontal, welcher Schenkel 25 sich parallel zu einem Flansch 26 der Heckverkleidung 7 erstreckt und an diesem mit entsprechenden Mitteln gehalten wird. Der Schenkel 25 beschreibt einen konvexen Bogen 27, der Flansch 26 eine konkaven Bogen 28, wobei der konvexe Bogen 27 und der konkave Bogen 20 verlaufen mit gleichem Abstand AgL zueinander verlaufen. Außerdem bildet der Schenkel 24 ein Fortsetzung der Heckverkleidung 7 bzw. einer aufrechten Abschlusswand 29, und der Schenkel 24 ist im Winkel β zu einer zweiten Senkrechten 30 angeordnet; ein unterer Rand 31 des Schenkels 24 im Winkel γ zu einer dritten Senkrechten 32, dergestalt, dass der Schenkel 24 und der untere Rand 31 in Fahrtrichtung A weisen.

In dem aufrechten Schenkel 24 sind mehrere zur Belüftung dienende Durchgangsöffnungen 33 vorgesehen, die im Ausführungsbeispiel als Rechtecke ausgeführt, wobei die längeren Seiten 34 der Durchgangsöffnungen 33 den Bögen 21 und 27 folgen. Es ist aber auch möglich die Durchgangsöffnungen quadratisch, kreisförmig oder dergl. auszubilden.

Eine besondere Formkonzeption wird erreicht, wenn die Endrohrvorrichtung 6 auf der dem Bogen 22 abgekehrten Seite 35 von einer Ebenen 36 begrenzt wird, die senkrecht zur Mittellängsebene B-B oder parallel zur Fahrbahn 3 verläuft und Doppelrohre 37,38 umfasst, die beiderseits der besagten Mittellängsebene B-B mit verhältnismäßig geringem Abstand Agr zueinander verlaufen. Dabei weist von der Rückseite des Kraftfahrzeugs 1 gesehen jedes Doppelrohr 37 und 38 in etwa die Form eines Dreiecks, das durch eine erste bogenförmige Seite 39, eine zweite senkrechte Seite 40 und eine dritte horizontale Seite 41 der Ebenen 36 gebildet wird.

Schließlich kann ein besonders ästhetischer Effekt dadurch erzielt werden, wenn die Blende 23 und die Heckverkleidung 7 eine gleichfarbige Lackierung oder die Blende 23 und die Endrohrvorrichtung 6 auf der sichtbaren Seite eine Hochglanzbeschichtung aufweisen.

## Patentansprüche

1. Abgasanlage mit einer Endrohrvorrichtung, die benachbart zu einem Wandteil eines Aufbaus eines Kraftfahrzeugs verläuft, **dadurch gekennzeichnet, dass** - in Fahrtrichtung (A) des Kraftfahrzeugs (1) gesehen - die Endrohrvorrichtung (6) mit einem ersten freien Ende (12) vor dem Wandteil (4) des Aufbaus (5) liegt, und - von der Rückseite des Kraftfahrzeugs (1) auf die Endrohrvorrichtung (6) gesehen - eine erste Kontur (19) eines unteren Endbereichs (18) des Wandteils (4) zumindest abschnittsweise mit einer äußeren zweiten Kontur (20) der Endrohrvorrichtung (6) im Wesentlichen korrespondiert.

2. Abgasanlage nach Anspruch 1, **dadurch gekennzeichnet, dass** die zweite Kontur (20) der Endrohrvorrichtung (6) als konvexer Bogen (21) und die erste Kontur (19) als konkaver Bogen (22) ausgeführt sind, wobei die Bögen (19 und 20) symmetrisch zu einer senkrechten Mittellängsebene (B-B) der Endrohrvorrichtung (6) verlaufen.

3. Abgasanlage nach Anspruch 1, **dadurch gekennzeichnet, dass** das Wandteil (4) durch eine Blende (23) gebildet wird, die an eine beispielsweise aus Kunststoff bestehende Heckverkleidung (7) des Aufbaus (5) angegliedert ist.

4. Abgasanlage nach Anspruch 3, **dadurch gekennzeichnet, dass** die Blende (23) beispielsweise aus Metall, Keramik oder dergl. besteht und als Hitzeschild für die Heckverkleidung (7) ausgebildet ist.

5. Abgasanlage nach den Ansprüchen 3 und 4, **dadurch gekennzeichnet, dass** die Blende (23) im Querschnitt winkelförmig ausgebildet ist und unter Vermittlung eines etwa horizontal verlaufenden ersten Schenkels (25) an einen dazu parallel verlaufenden Flansch (26) der Heckverkleidung (7) herangeführt ist.

6. Abgasanlage nach Anspruch 5, **dadurch gekennzeichnet, dass** ein zweiter aufrecht verlaufender Schenkel (24) der Blende (23) eine Fortsetzung einer korrespondierend ausgerichteten aufrechten Abschlusswand (29) der Heckverkleidung (7) bildet.

7. Abgasanlage nach Anspruch 6, **dadurch gekennzeichnet, dass** in dem zweiten aufrechten Schenkel (24) der Blende (23) ein oder mehrere zur Belüftung dienende Durchgangsöffnungen (33) vorgesehen sind.

8. Abgasanlage nach den Ansprüchen 2 und 7, **dadurch gekennzeichnet, dass** die Durchgangsöffnungen (33) Rechtecke sind, deren längere Seiten (34) der Richtung der Bögen (21,22) folgen.

9. Abgasanlage nach Anspruch 2, **dadurch gekennzeichnet, dass** die Endrohrvorrichtung (6) auf der dem Bogen (21) abgekehrten Seite (35) von einer Ebenen (36) begrenzt werden, die im rechten Winkel zur senkrechten Mittelebene (B-B) ausgerichtet ist.

10. Abgasanlage nach einem oder mehreren der vorangehenden Ansprüche, **dadurch gekennzeichnet**, **dadurch gekennzeichnet, dass** die Endrohrvorrichtung (6) Doppelrohre (37 und 38) umfasst, die beiderseits der senkrechten Mittellängsebene (B-B) mit relativ geringem Abstand (Agr) zueinander verlaufen.

11. Abgasanlage nach einem oder mehreren der vorangehenden Ansprüche, **dadurch gekennzeichnet, dass** - von der Rückseite des Kraftfahrzeugs (1) auf die Endrohrvorrichtung (6) gesehen - jedes Doppelrohr (37 und 38) in etwa die Form eines Dreiecks aufweist, das durch einen erste bogenförmige Seite (39), einen zweite senkrechte Seite (40) und einen dritte horizontale Seite (41) der Ebene (36) gebildet wird.

12. Abgasanlage nach einem oder mehreren der vorangehenden Ansprüche, **dadurch gekennzeichnet, dass** die Blende (23) und die Heckverkleidung (7) eine gleichfarbige Lackierung aufweisen.

13. Abgasanlage nach einem oder mehreren der vorangehenden Ansprüche, **dadurch gekennzeichnet, dass** die Endvorrichtung (6) und die Blende (7) auf der sichtbaren Seite mit einer Hochglanzbeschichtung versehen sind.
